# EUROPEAN PATENT SPECIFICATION

(11) **EP 1 881 639 B1**
(45) Date of publication and mention of the grant of the patent: **28.10.2009**
(21) Application number: 06741770.9
(22) Date of filing: 29.04.2006
(51) Int. Cl.: H04L 9/32, H04L 29/06, H04L 29/08, H04L 29/12

(54) **A METHOD AND SYSTEM FOR CPECF (CUSTOMER PREMISES EQUIPMENT CONFIGURATION FUNCTION) OBTAINING THE TERMINAL EQUIPMENT INFORMATION AND CONFIGURING THE TERMINAL EQUIPMENT**
VERFAHREN UND SYSTEM FÜR CPECF (KONFIGURATIONSFUNKTION FÜR GERÄTE AM KUNDENSTANDORT) ZUM ERHALTEN DER ENDGERÄTEINFORMATIONEN UND ZUM KONFIGURIEREN DER ENDGERÄTE
PROCEDE ET SYSTEME POUR CPECF (FONCTION DE CONFIGURATION D'EQUIPEMENT DANS LES LOCAUX DU CLIENT) POUR OBTENIR DES INFORMATIONS SUR L'EQUIPEMENT DU TERMINAL ET LE CONFIGURER

(30) Priority: 08.05.2005 CN 200510068338
(43) Date of publication of application: 23.01.2008
(73) Proprietor: Huawei Technologies Co., Ltd., Longgang District Shenzhen Guangdong 518129 (CN)
(72) Inventor: LAI, Xiaming, Huawei Administration Building, Shenzhen, Gugangdong 518129 (CN)
(74) Representative: Epping - Hermann - Fischer
(86) International application number: PCT/CN2006/000864
(87) International publication number: WO 2006/119690

(56) References cited:
- WO-A1-2004/062230
- WO-A1-2004/098130
- CN-A- 1 394 452
- CN-A- 1 558 606
- DSLHOME-TECHNICAL WORKING GROUP: "CPE WAN Management Protocol" INTERNET CITATION, [Online] XP002316355 Retrieved from the Internet: URL:http://www.dslforum.org/aboutdsl/Techn ical_Reports/TR-069.pdf> [retrieved on 2005-02-04]
- "NGN Functional Architecture; Network Attachment Subsystem; Release 1; Draft ETSI ES 02021" ETSI STANDARDS, LIS, SOPHIA ANTIPOLIS CEDEX, FRANCE, no. V0.2.3, 1 June 2004 (2004-06-01), XP014021267 ISSN: 0000-0001

## Description

### Field of the Invention

The invention relates to the field of network communication technology, and particularly, to a method and a system for obtaining terminal equipment information and configuring a terminal equipment by a customer premises equipment configuration function (CPECF) in a network attachment subsystem (NASS).

### Background of the Invention

With the development and evolvement of communication networks and communication services, intelligent network terminal equipments, as the executors of network services and the extension of broadband network, are becoming increasingly diversified. The relationship between these intelligent network terminal equipments and the networks is also becoming more and more complicated. A terminal equipment has to complete a series of network-and-service-related initialization configuration before the terminal equipment may cooperate with the network to perform services.

Online automatic terminal configuration technique supports plug-and-play of terminal equipment. In other words, the terminal equipment needs not to be configured by manufacturers, operators, vendors, or users. This simplifies the complexity of initialization configuration of the terminal equipment as much as possible, and improves operation capability of the terminal equipment.

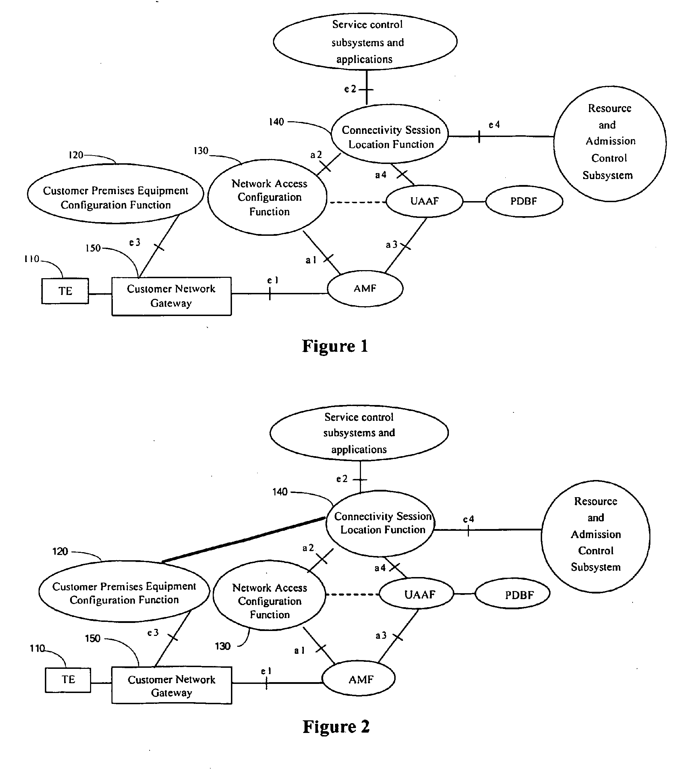

The Network Attachment Subsystem (NASS) described also in XP 14 021 267 is a subsystem for managing network attachment information as defined in European Telecommunication Standard Institute Telecommunications and Internet Converged Services and Protocols for Advanced Networking (ETSI TISPAN). Figure 1 shows the functional architecture of a NASS. The NASS is mainly designed to provide Internet Protocol (IP) address allocation function, IP layer authorization management, user-based authentication configuration, etc. The NASS includes a Terminal Equipment (TE) 110, a Customer Premises Equipment Configuration Function (CPECF) 120, a Network Access Configuration Function (NACF) 130, a Connectivity Session Location Function (CLF) 140, a Customer Network Gateway (CNG) 150, etc. The connection relationship of these components is as shown in Figure 1.

In order to access a network and perform services, the terminal equipment (TE) has to be configured with appropriate network information and service information. Particularly, the information may be configured manually for the TE accessing the network. Apparently, such an address configuration approach increases the operation complexity of the operators providing access services.

In the NASS, the TE is managed and configured by the CPECF. Therefore, the CPECF needs to know the mapping relationship between IP address and terminal equipment identification of the TE. However, there is no feasible technical scheme enabling the CPECF to obtain information of the terminal equipment required by the CPECF when configuring and managing the TE.

The CPE WAN Management Protocol, XP 2 316 355, produced by DSLHome-Technical Working Group discloses the CPE WAN Management Protocol that is intended for communication between a CPE and Auto-Configuration Server (ACS). The protocol defines a mechanism that encompasses secure auto-configuration of a CPE and also incorporates other CPE management functions into a common framework.

ETSI standard "NGN Functional Architecture; Network Attachment Subsystem; Release 1" describes the architecture of the Network Attachment Subsystem (NASS) identified in the overall TISPAN NGN architecture.

### Summary of the Invention

The invention provides a method and a system for obtaining information of a terminal equipment and configuring the terminal equipment by a Customer Premises Equipment Configuration Function (CPECF), to automatically configure the address of the terminal equipment in a Network Attachment Subsystem (NASS).

The object of the invention may be implemented with the following technical schemes.

The invention provides a method for obtaining terminal equipment information by a Customer Premises Equipment Configuration Function (CPECF) in a Network Attachment Subsystem (NASS), the method includes:
obtaining, by the CPECF, a terminal equipment identification stored in a Connectivity Session Location Function (CLF) and an Internet Protocol (IP) address allocated to a terminal equipment by a Network Access Configuration Function (NACF);
utilizing, by the CPECF, the terminal equipment identification and the IP address as the terminal equipment information of the terminal equipment managed by the CPECF.

Optionally, obtaining by the CPECF the terminal equipment identification and the IP address may include:
sending, by the NACF in the NASS, the IP address allocated to the terminal equipment to the CLF;
obtaining, by the CPECF, mapping relationship between the IP address and the terminal equipment identification from the CLF.

Optionally, obtaining by the CPECF the mapping relationship between the IP address and the terminal equipment identification may include:
establishing, by the CLF, the binding relationship between the IP address and the terminal equipment identification, and sending the binding relationship to the CPECF.

Optionally, obtaining by the CPECF the mapping relationship between the IP address and the terminal equipment identification may include:
establishing, by the CLF, the binding relationship between the IP address and the terminal equipment identification; when receiving a request message requesting the binding relationship from the CPECF, sending, by the CLF, the binding relationship to the CPECF.

Optionally, the request message requesting the binding relationship is sent to the CLF when the CPECF receives a registration message from the terminal equipment.

Optionally, obtaining by the CPECF the terminal equipment identification and the IP address may further include: obtaining, by the CPECF, the terminal equipment identification from the CLF, and sending the terminal equipment identification and the IP address to terminal equipment;
when the terminal equipment registers to the CPECF, obtaining, by the CPECF, the terminal equipment identification and the IP address from a registration message sent from the terminal equipment.

Optionally, the method may further include: when the terminal equipment managed by the CPECF is in a private network, obtaining, by the CPECF from the CLF, binding relationship between a private network identification and the terminal equipment identification or between a private network IP address and the terminal equipment identification.

Optionally, when the IP address is an IP address of a private network and the CPECF is not in the private network, a physical IP address of the terminal equipment is carried in the registration message sent by the terminal equipment to the CPECF.

Optionally, when the CPECF manages terminal equipments in a private network, the CPECF obtains from the CLF binding relationship between a private network identification and the terminal equipment identification or between a private network IP address and the terminal equipment identification.

The invention further provides a method for configuring a terminal equipment in a NASS, the method includes:
when the terminal equipment accesses the NASS, configuring, by a CPECF, the terminal equipment with network information and service information based on an IP address and a terminal equipment identification of the terminal equipment.

The invention also provides a NASS in which a CPECF obtains terminal equipment information. The NASS includes a CPECF and a CLF. A communication interface is provided between the CPECF and the CLF, the CPECF obtains terminal equipment information, including an address and a terminal equipment identification, from the CLF via the communication interface.

The invention also provides a NASS in which a CPECF obtains terminal equipment information. The NASS includes a terminal equipment, a CPECF, a CLF, and a NACF. The NACF is adapted to obtain terminal equipment identification from the CLF, and send, to the terminal equipment, binding relationship between the terminal equipment identification and an address of the terminal equipment allocated by the NACF. The CPECF is adapted to receive the binding relationship transmitted from the terminal equipment.

Optionally, the NACF includes:
a terminal equipment identification obtaining module, adapted to obtain the terminal equipment identification from the CLF;
a binding relationship sending module, adapted to send, to the terminal equipment, the binding relationship between the terminal equipment identification and the address of the terminal equipment allocated by the NACF.

The terminal equipment includes:
a binding relationship obtaining module, adapted to receive the binding relationship from the binding relationship sending module of the NACF;
a registration message sending module, adapted to transfer the binding relationship to the CPECF.

According to an embodiment of the invention, there is provided a method for obtaining terminal equipment information by a Customer Premises Equipment Configuration Function (CPECF), in a Network Attachment Subsystem (NASS). The method may include: obtaining, by the CPECF a terminal equipment identification stored in a Connectivity Session Location Function (CLF), and an IP address allocated to a terminal equipment by a Network Access Configuration Function (NACF), from the CLF via a communication interface provided between the CPECF and the CLF or via the NACF; and utilizing, by the CPECF, the terminal equipment identification and the IP address as the terminal equipment information of the terminal equipment managed by the CPECF.

According to an embodiment of the invention, there is provided a NASS. The NASS may include a CPECF and a CLF. The CPECF is adapted to obtain a terminal equipment identification stored in the CLF and IP address information of a terminal equipment, from the CLF via a communication interface provided between the CPECF and the CLF or via a Network Access Configuration Function (NACF), and utilize the terminal equipment identification and the IP address as the terminal equipment information of the terminal equipment managed by the CPECF.

As can be seen from the technical schemes of the invention, in the invention, the CPECF in the NASS may obtain the mapping relationship between an IP address and a terminal equipment identification of a terminal equipment (TE). Thereby, the CPECF may conveniently configure the TE with network information and service information required by the TE to perform services.

In other words, in the invention, since the CPECF obtains the IP address and the terminal equipment identification of the TE managed by the CPECF, the CPECF may configure and manage the TE conveniently. Therefore, the network manageability may be improved.

In addition, the invention is easy to implement since only a relatively small modification is made to the existing NASS system.

### Brief Description of the Drawings

Figure 1 is a schematic diagram illustrating the structure of a NASS;
Figure 2 is a schematic diagram illustrating the structure of a system according to an embodiment of the invention;
Figure 3 is a schematic diagram illustrating the structure of a system according to another embodiment of the invention;
Figure 4 is a schematic flow illustrating a method according to an embodiment of the invention;
Figure 5 is a schematic flow illustrating a method according to another embodiment of the invention;
Figure 6 is a schematic flow illustrating a method according to a further embodiment of the invention.

### Detailed Description of the Embodiments

A Customer Premises Equipment Configuration Function (CPECF) is required to obtain the mapping relationship between IP address and terminal equipment identification of a terminal equipment (TE) before automatically configuring and managing the TE. In the invention, the CPECF may obtain the mapping relationship, i.e., the binding relationship, between the IP address and the terminal equipment identification from a Connectivity Session Location Function (CLF).

In a technical scheme of the invention, a communication interface for intercommunication is provided on the CPECF and the CLF respectively. Thereby, the CPECF may directly obtain, from the CLF, the IP address allocated dynamically to the TE by a Network Access Configuration Function (NACF), as well as the corresponding terminal equipment identification. In another technical scheme of the invention, the CPECF may indirectly obtain information of the IP address and terminal equipment identification of the TE from the CLF via a NACF.

A system and a method according to the invention will be detailed below with reference to the accompanying drawings, for better understanding of the invention.

First, a system according to the invention will be described, which is as shown in Figure 2.

In a NASS according to the invention, a communication interface is provided on each of a CPECF 120 and a CLF 140, so that the CPECF 120 and the CLF 140 may communicate with each other. The CPECF 120 and the CLF 140 may exchange information with each other via the communication interfaces. In this way, the CPECF 120 may obtain mapping relationship between IP address and terminal equipment identification of a TE 110, and configure and manage the TE 110 based on the mapping relationship, so that the TE 110 may perform corresponding services. This simplifies the process of configuring the TE 110 by the operator.

In Figure 2, the locations of the newly added communication interfaces in the network are illustrated by a bold line between the CPECF 120 and the CLF 140.

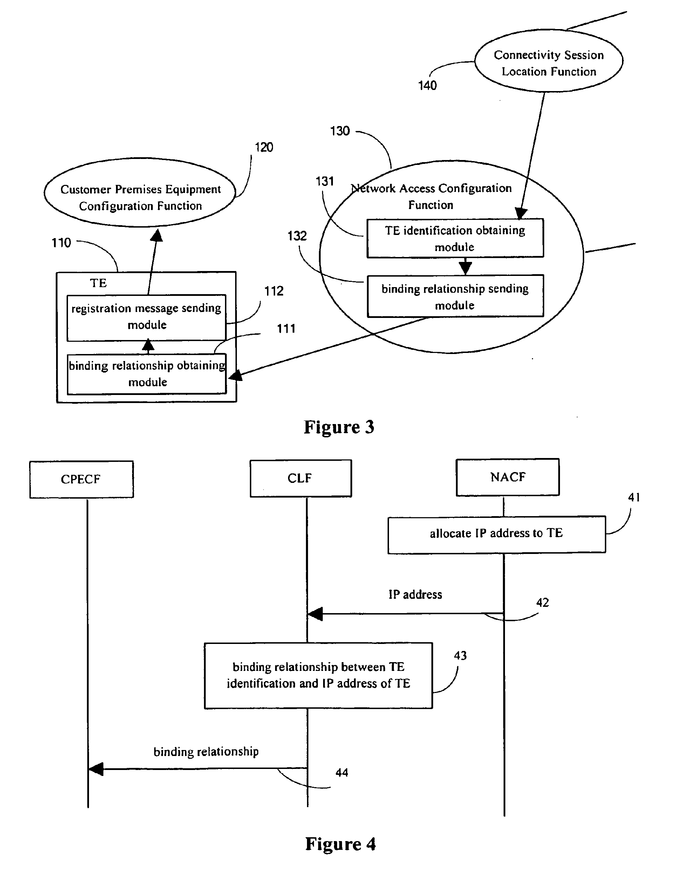

Figure 3 shows another NASS according to the invention. In the NASS, a terminal equipment identification obtaining module 131 and a binding relationship sending module 132 are provided in a NACF 130. The terminal equipment identification obtaining module 131 is configured to obtain information of terminal equipment identification from the CLF 140 actively or passively. The binding relationship sending module 132 is configured to send information of the binding relationship between IP address allocated to the TE 110 by the NACF and the terminal equipment identification. The TE 110 sends the binding relationship to the CPECF 120.

In the NASS, in order to support the NACF 130, the TE 110 is provided with a binding relationship obtaining module 111 and a registration message sending module 112. The binding relationship obtaining module 111 is configured to receive the information of the binding relationship (i.e., IP address and terminal equipment identification) sent from the binding relationship sending module 132 in the NACF. The registration message sending module 112 is configured to send the received binding relationship to the CPECF 120 using a registration message. In this way, the CPECF 120 obtains the binding relationship.

A method for obtaining TE information by a CPECF in a NASS according to an embodiment of the invention will be described in detail below, with reference to the accompanying drawings. As shown in Figure 4, the method includes the following steps.

Step 41, an NACF dynamically allocates an IP address to a TE accessing a network.

Step 42, the NACF sends the information of the IP address to a CLF.

Step 43, a binding relationship between a terminal equipment identification and the IP address of the TE is established on the CLF.

Step 44, the CLF sends the binding relationship to a CPECF.

After receiving the binding relationship (i.e., the information of the terminal equipment identification and the IP address), the CPECF may configure the TE with information based on the binding relationship. In this way, the TE is automatically configured.

Through the above process, CPECF may obtain the binding relationship required for configuring and managing the TE automatically. This facilitates the operation management of the operator.

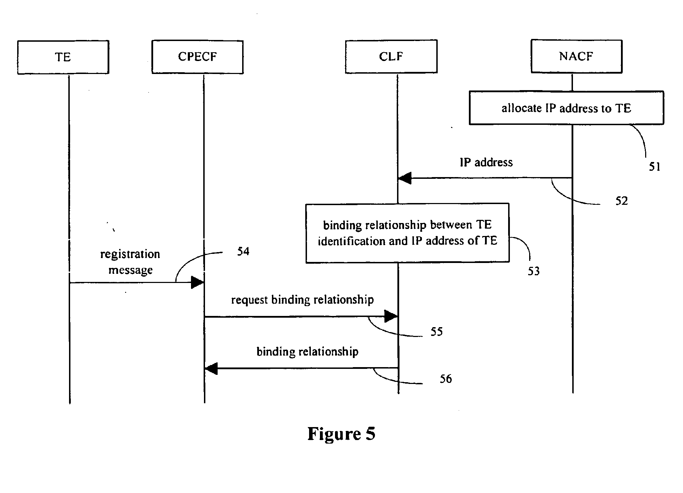

The method according to the invention may also be implemented in the following way. As shown in Figure 5; the method includes:
Step 51, a NACF dynamically allocates an IP address to a TE accessing the network.
Step 52, the NACF sends information of the IP address to a CLF.
Step 53, a binding relationship between a terminal equipment identification and the IP address is established in the CLF.
Step 54, the TE registers to a CPECF after obtaining the IP address.

The IP address is obtained by the TE from NACF after the TE accesses the network.

Step 55, the CPECF sends a request message to the CLF, requesting information of the IP address and the terminal equipment identification.

Step 56, when receiving the request message, the CLF returns the binding relationship to the CPECF via a response message.

Through the above process, the CPECF may obtain information (i.e., mapping relationship between IP address and terminal equipment identification) of TEs managed by the CPECF. Thereby, the CPECF may configure and manage the TEs automatically on the basis of the information.

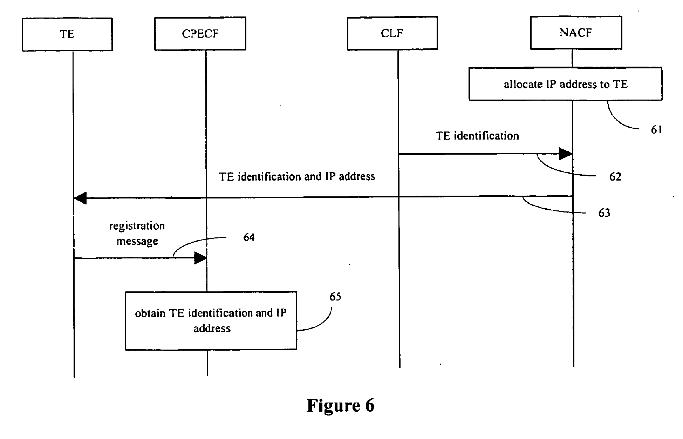

The invention may also be implemented with a method as shown in Figure 6. The method includes:
Step 61, a NACF dynamically allocates an IP address to a TE accessing the network.
Step 62, the NACF obtains, from a CLF, information of a terminal equipment identification, corresponding to the IP address.
Step 63,:the NACF sends the terminal equipment identification and the IP address to the TE.
Step 64, when obtaining the IP address from the NACF, the TE initiates a registration to a CPECF, i.e., sends a registration message carrying the terminal equipment identification.
Step 65, when receiving the registration message, the CPECF obtains the information of the IP address and terminal equipment identification from the registration message.

It should be noted that, in the processes as shown in Figure 5 and Figure 6, if the IP address is an IP address of a private network while the CPECF is not in that private network, the TE has to provide its IP address when the TE initiates a registration to the CPECF. In other words, the IP address should be included in the registration message. In this way, the problem that the CPECF is unable to obtain the physical IP address of a TE after passing through network address translation (NAT) may be solved.

In practice, when a TE registers to a CPECF in order to perform a service, the TE has to carry its physical IP address in a registration message to be sent to the CPECF, if the IP address of the TE is an IP address of a private network while the CPECF is not in the private network.

In the methods as shown in Figure 4, Figure 5, and Figure 6, if the IP address is an IP address of a private network and the CPECF has to manage TEs in more than one private network, the CPECF is required to obtain the mapping relationship between private network identification/IP address and terminal equipment identification, so as to effectively manage and configure the TEs in the private networks.

While the invention has been illustrated and described with reference to some preferred embodiments, the invention is not limited to these. Any variation and substitution that may be recognized readily by those skilled in the art should be covered within the protection scope of the invention as defined by the appended claims.

## Claims

1. A method for obtaining terminal equipment information by a Customer Premises Equipment Configuration Function, CPECF (120), in a Network Attachment Subsystem, NASS, **characterized by** comprising:
obtaining, by the CPECF (120), a terminal equipment identification stored in a Connectivity Session Location Function, CLF (140), and an Internet Protocol address, IP address, allocated to a terminal equipment (110) by a Network Access Configuration Function, NACF (130), from the CLF (140) via a communication interface provided between the CPECF (120) and the CLF (140) or via the NACF (130);
utilizing, by the CPECF (120), the terminal equipment identification and the IP address as the terminal equipment information of the terminal equipment (110) managed by the CPECF (120).

2. The method for obtaining terminal equipment information by a CPECF in a NASS according to claim 1, **characterized in that**, obtaining by the CPECF the terminal equipment identification and the IP address from the CLF (140) via the communication interface provided between the CPECF (120) and the CLF (140) comprises:
sending, by the NACF (130) in the NASS, the IP address allocated to the terminal equipment to the CLF (140);
obtaining, by the CPECF (120), mapping relationship between the IP address and the terminal equipment identification from the CLF (140) via the communication interface provided between the CPECF (120) and the CLF (140).

3. The method for obtaining terminal equipment information by a CPECF in a NASS according to claim 2, **characterized in that**, obtaining by the CPECF the mapping relationship between the IP address and the terminal equipment identification comprises:
establishing, by the CLF (140), the binding relationship between the IP address and the terminal equipment identification, and sending the binding relationship to the CPECF (120).

4. The method for obtaining terminal equipment information by a CPECF in a NASS according to claim 2, **characterized in that**, obtaining by the CPECF the mapping relationship between the IP address and the terminal equipment identification comprises:
establishing, by the CLF (140), the binding relationship between the IP address and the terminal equipment identification;
sending, by the CLF (140), the binding relationship to the CPECF (120) when receiving a request message requesting the binding relationship from the CPECF (120).

5. The method for obtaining terminal equipment information by a CPECF in a NASS according to claim 4, **characterized in that**, the request message requesting the binding relationship is sent to the CLF (140) when the CPECF (120) receives a registration message from the terminal equipment (110).

6. The method for obtaining terminal equipment information by a CPECF in a NASS according to claim 1, **characterized in that**, obtaining by the CPECF the terminal equipment identification and the IP address via the NACF (130) comprises:
obtaining, by the NACF, the terminal equipment identification from the CLF, and sending the terminal equipment identification and the IP address to the terminal equipment (110) ;
obtaining, by the CPECF, the terminal equipment identification and the IP address from a registration message sent from the terminal equipment when the terminal equipment registers to the CPECF.

7. The method for obtaining terminal equipment information by a CPECF in a NASS according to claim 6, **characterized by** further comprising:
when the terminal equipment managed by the CPECF is in a private network, obtaining, by the CPECF from the CLF, mapping relationship between a private network identification and the terminal equipment identification or between a private network IP address and the terminal equipment identification.

8. The method for obtaining terminal equipment information by a CPECF in a NASS according to claim 5, 6, or 7,
**characterized in that**,
when the IP address is an IP address of a private network and the CPECF (120) is not in the private network, an IP address in the private network of the terminal equipment (110) is carried in the registration message sent by the terminal equipment (110) to the CPECF (120).

9. The method for obtaining terminal equipment information by a CPECF in a NASS according to claim 1, **characterized by** further comprising:
when the terminal equipment (110) accesses the NASS, configuring, by the CPECF (120), the terminal equipment (110) with network information and service information based on the obtained IP address and the terminal equipment identification of the terminal equipment (110).

10. A Network Attachment Subsystem, NASS, comprising a Customer Premises Equipment Configuration Function, CPECF (120), and a Connectivity Session Location Function, CLF (140), **characterized in that** the CPECF (120) is adapted to obtain a terminal equipment identification stored in the CLF (140) and IP address information of a terminal equipment (110), from the CLF (140) via a communication interface provided between the CPECF (120) and the CLF (140) or via.a Network Access Configuration Function, NACF (130), and utilize the terminal equipment identification and the IP address as the terminal equipment information of the terminal equipment (110) managed by the CPECF (120).

11. The NASS according to claim 10, **characterized in that**, the NACF (130) is adapted to obtain a terminal equipment identification from the CLF (140), and send, to the terminal equipment (110), a binding relationship between the terminal equipment identification and the IP address of the terminal equipment allocated by the NACF (130);
the CPECF (120) is adapted to receive the binding relationship transmitted from the terminal equipment (110).

## Patentansprüche

1. Verfahren zum Erhalten von Endgeräte-Informationen durch eine Customer Premises Equipment Configuration Function, CPECF, (120) in einem Network Attachment Subsystem, NASS, **dadurch gekennzeichnet, dass** es Folgendes umfasst:
Erhalten einer in einer Connectivity Session Location Function, CLF, (140) gespeicherten Endgeräte-Identifizierung und einer einem Endgerät (110) durch eine Network Access Configuration Function, NACF, (130) zugeordneten Internetprotokolladresse, IP-Adresse, von der CLF (140) durch die CPECF (120) über eine zwischen der CPECF (120) und der CLF (140) bereitgestellte Kommunikationsschnittestelle oder über die NACF (130);
Nutzen der Endgeräte-Identifizierung und der IP-Adresse als die Endgeräte-Informationen des durch die CPECF (120) verwalteten Endgeräts (110) durch die CPECF (120).

2. Verfahren zum Erhalten von Endgeräte-Informationen durch eine CPECF in einem NASS nach Anspruch 1, **dadurch gekennzeichnet, dass** das Erhalten der Endgeräte-Identifizierung und der IP-Adresse von der CLF (140) über die zwischen der CPECF (120) und der CLF (140) bereitgestellte Kommunikationsschnittstelle durch die CPECF umfasst:
Senden der dem Endgerät zugewiesenen IP-Adresse an die CLF (140) durch die NACF (130) in dem NASS;
Erhalten der Abbildungsbeziehung zwischen der IP-Adresse und der Endgeräte-Identifizierung über die zwischen der CPECF (120) und der CLF (140) bereitgestellte Kommunikationsschnittstelle von der CLF (140) durch die CPECF (120).

3. Verfahren zum Erhalten von Endgeräte-Informationen durch eine CPECF in einem NASS nach Anspruch 2, **dadurch gekennzeichnet, dass** das Erhalten der Abbildungsbeziehung zwischen der IP-Adresse und der Endgeräte-Identifizierung durch die CPECF umfasst:
Herstellen der Bindungsbeziehung zwischen der IP-Adresse und der Endgeräte-Identifizierung durch die CLF (140) und Senden der Bindungsbeziehung an die CPECF (120).

4. Verfahren zum Erhalten von Endgeräte-Informationen durch eine CPECF in einem NASS nach Anspruch 2, **dadurch gekennzeichnet, dass** der Erhalten der Abbildungsbeziehung zwischen der IP-Adresse und der Endgeräte-Identifizierung durch die CPECF umfasst:
Herstellen der Bindungsbeziehung zwischen der IP-Adresse und der Endgeräte-Identifizierung durch die CLF (140);
Senden der Bindungsbeziehung an die CPECF (120) durch die CLF (140), wenn von der CPECF (120) eine Anforderungsnachricht empfangen wird, die die Bindungsbeziehung anfordert.

5. Verfahren zum Erhalten von Endgeräte-Informationen durch eine CPECF in einem NASS nach Anspruch 4, **dadurch gekennzeichnet, dass** die Anforderungsnachricht, die die Bindungsbeziehung anfordert, an die CLF (140) gesendet wird, wenn die CPECF (120) eine Registrierungsmeldung von dem Endgerät (110) empfängt.

6. Verfahren zum Erhalten von Endgeräte-Informationen durch eine CPECF in einem NASS nach Anspruch 1, **dadurch gekennzeichnet, dass** das Erhalten der Endgeräte-Identifizierung und der IP-Adresse über die NACF (130) durch die CPECF umfasst:
Erhalten der Endgeräte-Identifizierung von der CLF durch die NACF und Senden der Endgeräte-Identifizierung und der IP-Adresse an das Endgerät (110);
Erhalten der Endgeräte-Identifizierung und der IP-Adresse aus einer Registrierungsmeldung, die von dem Endgerät gesendet wird, wenn sich das Endgerät bei der CPECF registriert, durch die CPECF.

7. Verfahren zum Erhalten von Endgeräte-Informationen durch eine CPECF in einem NASS nach Anspruch 6, **dadurch gekennzeichnet, dass** es ferner umfasst:
wenn das durch die CPECF verwaltete Endgerät in einem privaten Netz ist, Erhalten der Abbildungsbeziehung zwischen einer Kennung des privaten Netzes und der Endgeräte-Identifizierung oder zwischen einer IP-Adresse des privaten Netzes und der Endgeräte-Identifizierung von der CLF durch die CPECF.

8. Verfahren zum Erhalten von Endgeräte-Informationen durch eine CPECF in einem NASS nach Anspruch 5, 6 oder 7, **dadurch gekennzeichnet, dass**,
wenn die IP-Adresse eine IP-Adresse eines privaten Netzes ist und die CPECF (120) nicht in dem privaten Netz ist, in der durch das Endgerät (110) an die CPECF (120) gesendeten Registrierungsmeldung eine IP-Adresse in dem privaten Netz des Endgeräts (110) übermittelt wird.

9. Verfahren zum Erhalten von Endgeräte-Informationen durch eine CPECF in einem NASS nach Anspruch 1, **dadurch gekennzeichnet, dass** es ferner umfasst:
wenn das Endgerät (110) auf das NASS zugreift, Konfigurieren des Endgeräts (110) mit Netzinformationen und Dienstinformationen auf der Grundlage der erhaltenen IP-Adresse und der Endgeräte-Identifizierung des Endgeräts (110) durch die CPECF (120).

10. Network Attachment Subsystem, NASS, das eine Customer Premises Equipment Configuration Function, CPECF, (120) und eine Connectivity Session Location Function, CLF, (140) umfasst, **dadurch gekennzeichnet, dass** die CPECF (120) dazu eingerichtet ist, von der CLF (140) über eine zwischen der CPECF (120) und der CLF (140) bereitgestellte Kommunikationsschnittstelle oder über eine Network Access Configuration Function, NACF, (130) eine in der CLF (140) gespeicherte Endgeräte-Identifizierung und IP-Adressen-Informationen eines Endgeräts (110) zu erhalten und die Endgeräte-Identifizierung und die IP-Adresse als die Endgeräte-Informationen des durch die CPECF (120) verwalteten Endgeräts (110) zu nutzen.

11. NASS nach Anspruch 10, **dadurch gekennzeichnet, dass** die NACF (130) dazu eingerichtet ist, eine Endgeräte-Identifizierung von der CLF (140) zu erhalten und eine Bindungsbeziehung zwischen der Endgeräte-Identifizierung und der durch die NACF (130) zugewiesene IP-Adresse des Endgeräts an das Endgerät (110) zu senden;
die CPECF (120) dazu eingerichtet ist, die von dem Endgerät (110) gesendete Bindungsbeziehung zu empfangen.

## Revendications

1. Méthode pour obtenir des informations d'équipement terminal au moyen d'une Fonction de configuration d'équipements de locaux d'abonné, CPECF, (120) dans un sous-système d'attachement au réseau, NASS, **caractérisée en ce qu'**elle comprend:
l'obtention, par le CPECF (120), d'une identification d'équipement terminal mémorisée dans une Fonction de localisation de session de connectivité, CLF, (140), et d'une adresse selon le protocole Internet, adresse IP, attribuée à un équipement terminal (110) par une Fonction de configuration de l'accès au réseau, NACF, (130), à partir de la CLF (140) et via une interface de communication réalisée entre la CPECF (120) et la CLF (140) ou via la NACF (130);
l'utilisation, par la CPECF (120), de l'identification d'équipement terminal et de l'adresse IP comme les informations d'équipement terminal de l'équipement terminal (110) géré par la CPECF (120).

2. Méthode pour obtenir des informations d'équipement terminal au moyen d'une CPECF dans un NASS selon la revendication 1, **caractérisée en ce que** l'obtention, par la CPECF, de l'identification d'équipement terminal et de l'adresse IP depuis la CLF (140) via l'interface de communication réalisée entre la CPECF (120) et la CLF (140) comprend:
l'envoi à la CLF (140), par la NACF (130) dans le NASS, de l'adresse IP attribuée à l'équipement terminal;
l' obtention, par la CPECF (120), d'une relation de mappage entre l'adresse IP et l'identification d'équipement terminal depuis la CLF (140) via l'interface de communication réalisée ente la CPECF (120) et la CLF (140).

3. Méthode pour obtenir des informations d'équipement terminal au moyen d'une CPECF dans un NASS selon la revendication 2, **caractérisée en ce que** l'obtention, par la CPECF, de la relation de mappage entre l'adresse IP et l'identification d'équipement terminal comprend:
l'établissement, par la CLF (140), de la relation de liaison entre l'adresse IP et l'identification d'équipement terminal, et l'envoi de la relation de liaison à la CPECF (120).

4. Méthode pour obtenir des informations d'équipement terminal au moyen d'une CPECF dans un NASS selon la revendication 2, **caractérisée en ce que** l'obtention, par la CPECF, de la relation de mappage entre l'adresse IP et l'identification d'équipement terminal comprend:
l'établissement, par la CLF (140), de la relation de liaison entre l'adresse IP et l'identification d'équipement terminal;
l'envoi, par la CLF (140), de la relation de liaison à la CPECF (120) à la réception d'un message de demande demandant la relation de liaison depuis la CPECF (120).

5. Méthode pour obtenir des informations d'équipement terminal au moyen d'une CPECF dans un NASS selon la revendication 4, **caractérisé en ce que** le message de demande demandant la relation de liaison est envoyé à la CLF (140) lorsque la CPECF (120) reçoit un message d'inscription depuis l'équipement terminal (110).

6. Méthode pour obtenir des informations d'équipement terminal au moyen d'une CPECF dans un NASS selon la revendication 1, **caractérisée en ce que** l'obtention, par la CPECF, de l'identification d'équipement terminal et de l'adresse IP via la NACF (130) comprend:
l'obtention, par la NACF, de l'identification d'équipement terminal depuis la CLF et l'envoi de l'identification d'équipement terminal et de l'adresse IP à l'équipement terminal (110);
l'obtention, par la CPECF, de l'identification d'équipement terminal et de l'adresse IP à partir d'un message d'inscription envoyé depuis l'équipement terminal lorsque l'équipement terminal s'inscrit à la CPECF.

7. Méthode pour obtenir des informations d'équipement terminal au moyen d'une CPECF dans un NASS selon la revendication 6, **caractérisée en ce qu'**elle comprend en outre:
lorsque l'équipement terminal géré par la CPECF est dans un réseau privé, l'obtention, par la CPECF depuis la CLF, d'une relation de mappage entre une identification du réseau privé et l'identification de terminal privé ou entre une adresse IP du réseau privé et l'identification d'équipement terminal.

8. Méthode pour obtenir des informations d'équipement terminal au moyen d'une CPECF dans un NASS selon l'une quelconque des revendications 5, 6 ou 7
**caractérisée en ce que**,
lorsque l'adresse IP est une adresse IP d'un réseau privé et que la CPECF (120) n'est pas dans le réseau privé, une adresse IP dans le réseau privé de l'équipement terminal (110) est transportée dans le message d'inscription envoyé par l'équipement terminal (110) à la CPECF (120).

9. Méthode pour obtenir des informations d'équipement terminal au moyen d'une CPECF dans un NASS selon la revendication 1, **caractérisée en ce qu'**elle comprend en outre:
lorsque l'équipement terminal (110) accède au NASS, la configuration, par la CPECF (120), de l'équipement terminal (110) avec des informations du réseau et des informations du service basées sur l'adresse IP obtenues et de l'identification d'équipement terminal de l'équipement terminal (110).

10. Sous-système d'attachement au réseau, NASS, comprenant une Fonction de configuration d'équipements de locaux d'abonné, CPECF, (120) et une Fonction de localisation de session de connectivité, CLF, (140), **caractérisé en ce que** la CPECF (120) est adaptée pour obtenir une identification d'équipement terminal mémorisée dans la CLF (140) et des informations d'adresse IP d'un équipement terminal (110) depuis la CLF (140) via une interface de communication réalisée entre la CPECF (120) et la CLF (140) ou via une Fonction de configuration de l'accès au réseau, NACF, (130), et pour utiliser l'identification d'équipement terminal et l'adresse IP comme les informations d'équipement terminal de l'équipement terminal (110) géré par la CPECF (120).

11. Sous-système d'attachement au réseau (NASS) selon la revendication 10, **caractérisé en ce que** la NACF (130) est adaptée pour obtenir une identification d'équipement terminal depuis la CLF (140) et envoyer à l'équipement terminal (110) une relation de liaison entre l'identification d'équipement terminal et l'adresse IP de l'équipement terminal attribuée par la NACF (130);
la CPECF (120) est adaptée pour recevoir la relation de liaison transmise depuis l'équipement terminal (110).
